# EUROPEAN PATENT APPLICATION

(11) **EP 4 197 670 A1**
(43) Date of publication of application: **21.06.2023**
(21) Application number: 21216048.5
(22) Date of filing: 20.12.2021
(51) Int. Cl.: B22F 1/00, B22F 1/05, B33Y 70/00, C22C 33/02, C22C 38/44

(54) **SUPER DUPLEX STAINLESS STEEL FOR ADDITIVE MANUFACTURE**

(71) Applicant: EOS GmbH Electro Optical Systems, 82152 Krailling (DE)
(72) Inventor: Seppälä, Antti, 20750 Turku (FI); Malmivirta, Mika, 20740 Turku (FI)
(74) Representative: Meissner Bolte Partnerschaft mbB

(57) **Abstract**

The present application is concerned with a powder mixture for additive manufacturing processes, wherein the powder mixture comprises a duplex steel powder component and an austenitic steel powder component, wherein the powder mixture comprises Cr in an amount of at least 21.3 % by weight. The addition of the austenitic steel powder component increases the ductility of the duplex steel and reduces internal stresses which result in cracking in objects build with duplex steel. The present application is further concerned with methods for the preparation of such powder mixtures, methods and devices for the preparation of three-dimensional objects from the powder mixtures and three-dimensional objects, which have been prepared accordingly, as well as the use of an austenitic steel powder to suppress the formation of cracks in duplex steel three-dimensional objects.

## Description

The present application is concerned with a powder mixture for additive manufacturing processes, wherein the powder mixture comprises a steel powder component of a steel having two steel phases with an austenitic and a ferritic phase and an austenitic steel powder component, wherein the powder mixture comprises Cr in an amount of at least 21.3 % by weight. The present application is further concerned with methods for the preparation of such powder mixtures, methods and devices for the preparation of three-dimensional objects from the powder mixtures and three-dimensional objects, which have been prepared accordingly, as well as the use of an austenitic steel powder to suppress the formation of cracks in duplex steel three-dimensional objects.

### State of the art

Over the recent years, the environments in which corrosion resistant metallic materials are used became more and more aggressive, and the requirements on the corrosion properties as well as on their mechanical properties has increased. Duplex steel alloys, which were established as an alternative to other use steel grades, as for example high alloyed austenitic steels, nickel-base alloys or other high alloyed steels, are not exempted from this development.

Duplex steels have higher strengths than stainless chrome-nickel steels but are more ductile than stainless chrome steels. In particular, duplex steels are designed to provide better corrosion resistance, particularly chloride stress corrosion and chloride pitting corrosion, and higher strength than standard austenitic stainless steels such as Type 304 or 316. They are therefore used extensively in the offshore oil and gas industry for pipework systems, manifolds, risers, etc. and in the petrochemical industry in the form of pipelines and pressure vessels.

With varying loads, they still show fatigue strength up to an austenite content of around 40% in contrast to pure austenites. In contrast to ferritic or even martensitic stainless steels, the progression of the impact work (Aᵥ-T diagram) in duplex steels does not have a steep drop in energy absorption, i.e. there is an upper and a lower position, but the transition is stretched over a wide temperature range.

In recent times also the elements Cu and W have shown to be efficient alloying additions for further optimization of the steel's corrosion properties in chloride environments. The element W has by then been used as substitute for a portion of Mo, as for example in the commercial alloy DP3W (UNS S39274) or ZeronlOO, which contain 2,0% respectively 0,7% W. The later contains even 0,7% Cu with the purpose to increase the corrosion resistance of the alloy in acid environments.

An established measure for the corrosion resistance in chloride-containing environments is the so-called Pitting Resistance Equivalent Number (abbreviated PREN), which is defined as PREN = %Cr+3,3%Mo+16%N (the percentages for each element are in weight-percent). A higher numerical PREN value indicates a better corrosion resistance in particular against pitting corrosion. The essential alloying elements, which affect this property, are Cr, Mo, N.

The respective alloys can be used in a variety of application, where high corrosion resistance is required, which include in particular equipment in the oil and gas field (e.g. flowlines, manifolds, risers, pumps, valves) but also in pulp and paper applications, chemical engineering, water treatment mobility and engineering.

Direct Metal Laser Sintering (DMLS) is a laser-based rapid prototyping and tooling process by means of which net shape parts are fabricated in a single process. Complex parts can be produced directly from 3D-CAD models by layer-wise solidification of metal powder layers in portions of the layer corresponding to the cross-section of the three-dimensional part in the respective layer. This process is described in detail for example in Juha Kotila et al., Steel-based Metal Powder Blend for Direct Metal Laser Sintering Process, Advances in Powder Metallurgy & Particular Materials - 1999, Vol.2 Part 5, p. 87-93 and in T. Syvanen et al., New Innovations in Direct Metal Laser Sintering Process - A Step Forward in Rapid Prototyping and Manufacturing, Laser Materials Processing, Vol. 87, 1999, p. 68 to 76.

A method for producing three-dimensional objects by selective laser sintering or selective laser melting and an apparatus for carrying out this method is disclosed, for example, in EP 1 762 122 Al.

There is a high demand for processing metal materials by additive manufacturing processes such as Direct Metal Laser Sintering, so that rapid manufacturing can be applied to applications where a specific material having well-known properties is required. One important class of materials is steel, which is widely used in many products. Many different kinds of steel exist and are commercially available for conventional manufacturing methods, such as casting, forging, machining etc. as referenced in international standards, reference books, manufacturers' catalogues etc.

When a duplex steel is processed by additive manufacture such as laser sintering or laser melting, the molten material solidifies very quickly as only small volumes of metal are molten at each step. This has the advantage for duplex steels, that the precipitation of intermetallic phases is avoided, but faces the problem that the material cools so rapidly that also the formation of the austenitic phase is suppressed.

Kohler et al, in Euro PM2020-Session 48: AM properties - Stainless steel disclose a process for the generation of a duplex steel microstructure, wherein the formation of austenitic steel phase in laser powder bed fusion was facilitated by the addition of an austenitic steel powder, so that the overall quantity of austenitic material was increased. In this paper, it is reported that on addition of 70% austenitic steel powder the ratio of austenitic to ferritic phase could be shifted to almost 50% (depending on the processing conditions in the as solidified material). The paper speculates that this addition could eliminate the need for a subsequent heat annealing treatment of the steel to provide an about even distribution of austenitic and ferric phase, which is desired in duplex steels.

On the other hand, by addition of large quantities of austenitic material, the advantage of duplex steels over austenitic steel (e.g. corrosion resistance, chloride pitting resistance and strength) is diluted, so that the mixtures in this paper can be expected to provide only little advantage over regular austenitic steel.

Accordingly, there is a need for a duplex steel material for use in additive manufacture which avoids an excessive dilution of the duplex steel properties.

The present application addresses these needs.

### Description of the invention

In the investigations underlying the present application, the inventors have unexpectedly discovered that a mixture of a duplex steel powder and an austenitic steel powder, wherein the mixture has a higher content of chromium, allows for a reduction of the austenitic steel powder additive, while still a larger quantity of austenitic phase is formed directly after processing of the powder mixture by additive manufacture. In addition, it has unexpectedly been found that cracking of three-dimensional objects, which are prepared by additive manufacture from duplex steel powders only, can be avoided by using the powder mixtures described herein below. It is assumed that the addition of the austenitic steel component increases the ductility of the steel on solidification, thereby reducing internal stresses which otherwise lead to cracking.

Accordingly, in a first aspect, the present application provides a powder mixture for an additive manufacturing process, wherein the powder mixture comprises a steel powder component of a steel having two steel phases with an austenitic and a ferritic phase (i.e. a duplex steel) and an austenitic steel powder component, wherein the powder mixture comprises Cr in an amount of at least 21.3 % by weight. Preferably, the powder mixture comprises Cr in an amount of at least 21.5 % by weight and/or 29.0 % by weight or less, more preferably in an amount of at least 22 % by weight and/or 27.0 % by weight or less and even more preferably of at least 23.0 % by weight and/or 25.0 % by weight or less.

For the powder mixture it is preferred that the majority thereof is provided by duplex steel powder, whereas the content of the austenitic steel powder should be adjusted to provide a sufficient amount of austenitic phase, when the powder mixture is processed. A suitable amount of duplex steel powder is e.g. about 50 to 80 wt.-%, and in particular 60 to 80 wt.-%. A suitable amount of austenitic steel powder is e.g. about 20 to 50 wt.-%, preferably 20 to 40 wt.-%.

The duplex steel powder is not subject to any relevant restriction, except that in most cases it has a higher content of chromium than the austenitic steel powder, and the Cr content must be high enough to provide a minimum total chromium content of 21.3 wt.-% in the mixture with the austenitic steel powder. Preferably, the duplex steel is a duplex steel which has a pitting resistance equivalence number PREN of ≥ 38 and ≤ 45, preferably of ≥ 40 and/or ≤ 43.5.

The pitting resistance equivalence number (PREN) is a measure for the pitting corrosion resistance of the steel and is calculated as PREN = %Cr + 3.3 %Mo + 16 %N, wherein the respective percentages are percentages by weight. Suitable duplex steels are steels comprising up to 0.06 wt.-% of C; up to 1.2 wt.-% of Si; up to 4.0 wt.-% of Mn; up to 0.04 wt.-% of P; up to 0.02 wt.-% of S; 0.02 to 0.55 wt.-% of N; 22.5 to 32 wt.-% of Cr; up to 3.0 wt.-% of Cu; 0.1 to 4.5 wt.-% of Mo; 3 to 10 wt.-% of Ni; up to 1.0 wt.-% of W and optionally 0.5 to 2.0 wt.-% of Co, the balance is Fe. Particularly suitable duplex steels are for example duplex steels with the designation EN 1.4662, EN 1.4507, EN 1.4460, EN 1.4410, EN 1.4501, EN 1.4477, EN 1.4658 or EN 1.4655. A particularly preferred duplex steel is EN 1.4507, EN 1.4501 or EN 1.4410, especially EN 1.4410. The respective grades are all according to EN 10088-1 (2014).

The austenitic steel powder component can be based on any austenitic steel, such as e.g. EN 1.4404, EN 1.4571, or EN 1.4547. A preferred austenitic steel is an austenitic steel with a chromium content of at least 17 wt.-% and preferably at least 18 wt.-% and/or 22 wt.-% or less and preferably 21 wt.-% or less. In addition, it is preferred that the austenitic steel powder contains relevant quantities of nickel and molybdenum, i.e. nickel in an amount of at least 15 wt.-% and preferably at least 16 wt.-% and/or 20 wt.-% or less and preferably 19 wt.-% or less and molybdenum and in an amount of at least 3 wt.-% and preferably at least 5 wt.-% and/or 9 wt.-% or less and preferably 7 wt.-% or less. The austenitic steel may further optionally comprise up to 0.7 wt.-% of Ti, up to 0.1 wt.-% of C, up to 1.5 wt.-% of Mn, 0.1 to 0.5 wt.-% of N, up to 1.2 wt.-% of Cu, up to 1 wt.-% of Si, and O, P and S in respective amounts of up to 0.04 wt.-%. A particularly preferred austenitic steel for the fabrication of the austenitic steel powder component is EN 1.4547 steel (according to EN 10088-1 (2014)).

The powder of the inventive powder mixture has a particle size, which is suitable for processing with additive manufacture, i.e. a size, which is small enough to allow for selective fluidization of positions in a three-dimensional object, which is to be created, and by which an object with a tolerable surface roughness can be prepared. In a preferred embodiment, the average particle size (based on weight) of the steel powder component of a steel having two steel phases with an austenitic and a ferritic phase and/or the austenitic steel powder component is in the range of from 10 µm to 100 µm and especially 20 µm or more and/or 60 µm or less. Here, the average particle size is determined by laser diffraction according to ISO 13320.

In a second aspect, the present application concerns a method for the preparation of a powder mixture as described herein above, wherein the powder mixture is produced by mixing a steel powder of a steel having two steel phases with an austenitic and a ferritic phase and an austenitic steel powder in a predetermined ratio. Preferably, the mixing in this method is by dry mixing. Alternatively, the mixing could also be performed by methods such as ball mixing of micro or nano components.

A third aspect of the present invention concerns a method for the manufacture of a three-dimensional object, which comprises providing a powder mixture as defined herein above, preferably a powder mixture prepared according to the above described second aspect, and preparing the object by applying the mixture layer on layer and selectively consolidating the mixture, in particular by application of particle (e.g. electron) or electromagnetic radiation, at positions in each layer, which correspond to the cross section of the object in this layer, wherein the positions are scanned in at least one interaction zone, in particular in a radiation interaction zone of an energy beam bundle.

Using this method, for example a three-dimensional object with reduced cracking compared to the same three-dimensional object, which is prepared with only the powder of the steel having two steel phases with an austenitic and a ferritic phase can be manufactured.

The three-dimensional object may be an object of a single material (i.e., a material resulting from the processing of the powder mixture as described above) or an object of different materials. If the three-dimensional object is an object of different materials, this object can be produced, for example, by applying the powder mixture of the invention, for example, to a base body or pre-form of the other material.

For the inventive method, it is further preferred that the individual layers, which are subsequently subjected at least in part to treatment with particle (e.g. electron) or electromagnetic radiation, are applied at a thickness of 10 µm or more, preferably 20 µm or more and more preferably 30 µm or more. Alternatively or cumulatively, the layers are applied at a thickness of preferably 100 µm or less, more preferably 90 µm or less and even more preferably 85 µm or less. In a particularly preferred embodiment, the thickness, in which the layers are applied, is in the range of 30 to 50 µm. In another particularly preferred embodiment the thickness, in which the layers are applied, is in the range of 70 to 90 µm.

For the inventive method, it is further preferred that the powder mixture is processed with a heat input in the range of from 30 to 80 J/mm³ and preferably at least 40 J/mm³ or more and/or 60 J/mm³ or less. Here the heat input is calculated from the processing parameters as laser power/(laser speed^{∗}hatch distance^{∗}layer thickness).

In the inventive method, it has in addition been found that an annealing treatment of the three-dimensional object may shift the physical characteristics thereof to the physical characteristics expected for duplex steel, i.e. while the ultimate tensile strength and the yield strength is slightly decreased, the impact toughness and elongation are significantly increased. This effect is mostly due to conversion of some of the ferritic phase in the three-dimensional object to an austenitic phase. To enable such conversion, the temperature in the annealing treatment should be in the appropriate temperature window to allow for the formation of austenitic phase in the steel, i.e. the temperature in the annealing treatment should preferably be more than 770°C and less than 1500°C. Preferably, the temperature in the annealing treatment should be 900°C or more and/or 1350°C or less and more preferably 1000°C or more and/or 1200°C or less.

As the skilled practitioner will appreciate, the conversion to austenitic phase is influenced by both the temperature and the time, for which the material is subjected to the annealing temperature, where longer exposition times as well as higher temperatures facilitate the formation of more austenitic phase. Thus, the annealing time will be adjusted by the skilled practitioner based on the amount of austenitic phase, which is eventually desired. On the other hand, for reasons of process economy, the annealing time should be as short as possible. In the investigation underlying the present invention, it has been found that the annealing time should preferably be in the range of 30 to 120 Min, and more preferably 45 min or more and/or 90 min or less. This applies in particular if the annealing temperature is in the range of 1000 to 1200°C.

In a fourth aspect, the present invention concerns three-dimensional object which is prepared by the method as herein indicated above, i.e. a method wherein the three-dimensional object is prepared by selective layer-wise solidification of the powder mixture by means of an electromagnetic and/or particle radiation at positions that correspond to a cross-section of the object in a respective layer, wherein the powder mixture is a powder mixture for use in the manufacture of a three-dimensional object by means of an additive manufacturing method, wherein the powder mixture comprises a steel powder component of a steel having two steel phases with an austenitic and a ferritic phase (duplex steel) and an austenitic steel powder component, wherein the powder mixture comprises Cr in an amount of at least 21.3 % by weight, and wherein the powder mixture is adapted to form an object when solidified by means of electromagnetic and/or particle radiation in the additive manufacturing method. The three-dimensional object has, for example, reduced likelihood of crack formation when compared to the same three-dimensional object, which is prepared with only the powder component of a steel having two steel phases with an austenitic and a ferritic phase.

The three-dimensional object according to the invention in the fourth aspect is preferably a three-dimensional object, wherein the material of the three-dimensional object has an ultimate tensile strength of more than 900 MPa and preferably at least 1000 and/or 1350 MPa or less, and/or a yield strength of more than 800 MPa and preferably at least 850 MPa and/or 1250 MPa or less, and/or an elongation of at least 8% and preferably of at least 12% and/or 25% or less and/or an impact toughness of at least 50 J and preferably at least 60 J and/or 120 J or less in the state directly after the preparation by additive manufacture (i.e. prior to an annealing treatment).

The three-dimensional object according to the invention in the fourth aspect is further preferably a three-dimensional object, wherein the material of the three-dimensional object has an ultimate tensile strength of more than 800 MPa and preferably at least 830 and/or 900 MPa or less, and/or a yield strength of more than 500 MPa and preferably at least 550 MPa and/or 650 MPa or less, and/or an elongation of at least 25% and preferably of at least 28% and/or 40% or less and/or an impact toughness of at least 100 J and preferably at least 120 J and/or 180 J or less in the state after heat treatment.

In the above, for comparative purposes, the respective ultimate tensile strength, yield strength and elongation is measured in the direction perpendicular to the building plane according to DIN EN ISO 6892-1 (2020). The impact toughness is determined according to DIN ISO 148-1 (2017) via v-notch pendulum impact.

The three-dimensional object according to the invention preferably has a ferritic fraction of from 50 to 80 % and more preferably of at least 60 and/or 70 % or less, wherein the content of the ferritic fraction is determined by a magneto-inductive method according to DIN EN ISO 17655, e.g. by using a Feritscope^{®} FMP 30. Preferably, the indicated amounts of ferritic fraction are provided directly after additive manufacture and before the three-dimensional object is subjected to annealing temperatures of more than 800 °C.

For specific embodiments of the steel powder component of a steel having two steel phases with an austenitic and a ferritic phase (duplex steel) and the austenitic steel powder component, reference is made to the above preferred embodiments which have been described in connection with the inventive powder mixtures.

For the three-dimensional objects of either of the above, it is preferred that they have a relative density of 98% or more, preferably 99% or more and more preferably 99.5% or more, wherein the relative density is defined as the ratio of the measured density and the theoretical density. The theoretical density is the density which can be calculated from the density of the bulk materials used to prepare the three-dimensional object (basically metal alloy particles) and their respective ratios in the three-dimensional object. The measured density is the density of the three-dimensional object as determined by the Archimedes Principle according to ISO 3369:2006.

In a fifth aspect, the present invention concerns the use of an austenitic steel powder to suppress the formation of cracks in a three-dimensional object, which is prepared by additive manufacture from a steel powder having two steel phases with an austenitic and a ferritic phase.

Preferably, the three-dimensional object in this use is prepared by a method as described in the above third aspect. In addition, or in alternative thereto, the steel powder having two steel phases with an austenitic and a ferritic phase preferably has a PREN of at least 38 and more preferably of at least 40 and/or 45 or less.

The use is preferably implemented by mixing the austenitic steel powder with steel powder having two steel phases with an austenitic and a ferritic phase and by subsequently processing the mixture by an additive manufacturing process.

Finally, in a sixth aspect the present invention concerns a device for implementing a process as described above, wherein the device comprises an irradiation unit emitting electromagnetic or particle irradiation, preferably a laser sintering or laser melting device (20), a process chamber having (3) an open container (5) with a container wall (6), a support (10), which is inside the process chamber (3), wherein open container (5) and support (10) are moveable against each other in vertical direction, a storage container (14) and a recoater (16), which is moveable in horizontal direction, and wherein the storage container (14) is at least partially filled with a powder mixture as described in the first aspect.

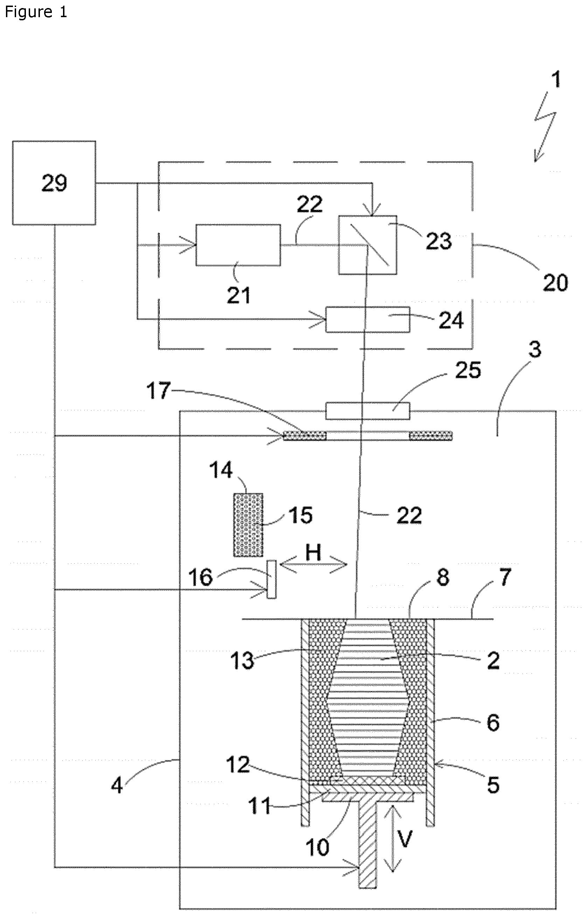

Other features and embodiments of the invention are provided in the following description of an exemplary embodiment taking account of the appended Figure 1.

The device represented in Figure 1 is a laser sintering or laser melting apparatus 1 for the manufacture of a three-dimensional object 2. The apparatus 1 contains a process chamber 3 having a chamber wall 4. A container 5 being open at the top and having a container wall 6 is arranged in the process chamber 3. The opening at the top of the container 5 defines a working plane 7. The portion of the working plane 7 lying within the opening of the container 5, which can be used for building up the object 2, is referred to as building area 8. Arranged in the container 5, there is a support 10, which can be moved in a vertical direction V, and on which a base plate 11 which closes the container 5 toward the bottom and therefore forms the base of the container 5 is attached. The base plate 11 may be a plate which is formed separately from the support 10 and is fastened on the support 10, or may be formed so as to be integral with the support 10. A building platform 12 on which the object 2 is built may also be attached to the base plate 11. However, the object 2 may also be built on the base plate 11, which then itself serves as the building platform.

In Figure 1, the object 2 to be manufactured is shown in an intermediate state. It consists of a plurality of solidified layers and is surrounded by building material 13 which remains unsolidified. The apparatus 1 furthermore contains a storage container 14 for building material 15 in powder form, which can be solidified by electromagnetic radiation, for example a laser, and/or particle radiation, for example an electron beam. The apparatus 1 also comprises a recoater 16, which is movable in a horizontal direction H, for applying layers of building material 15 within the building area 8. Optionally, a radiation heater 17 for heating the applied building material 15, e.g. an infrared heater, may be arranged in the process chamber.

The device in Figure 1 furthermore contains an irradiation device 20 having a laser 21, which generates a laser beam 22 that is deflected by means of a deflecting device 23 and focused onto the working plane 7 by means of a focusing device 24 via an entrance window 25, which is arranged at the top side of the process chamber 3 in the chamber wall 4.

The device in Figure 1 furthermore contains a control unit 29, by means of which the individual component parts of the apparatus 1 are controlled in a coordinated manner for carrying out a method for the manufacture of a three-dimensional object. The control unit 29 may contain a CPU, the operation of which is controlled by a computer program (software). During operation of the apparatus 1, the following steps are repeatedly carried out: For each layer, the support 10 is lowered by a height which preferably corresponds to the desired thickness of the layer of the building material 15. The recoater 16 is moved to the storage container 14, from which it receives an amount of building material 15 that is sufficient for the application of at least one layer. The recoater 16 is then moved over the building area 8 and applies a thin layer of the building material 15 in powder form on the base plate 11 or on the building platform 12 or on a previously applied layer. The layer is applied at least across the cross-section of the object 2, preferably across the entire building area 8. Optionally, the building material 15 is heated to an operation temperature by means of at least one radiation heater 17. The cross-section of the object 2 to be manufactured is then scanned by the laser beam 22 in order to selectively solidify this area of the applied layer. These steps are carried out until the object 2 is completed. The object 2 can then be removed from the container 5.

According to the invention, a powder mixture is used as building material 15. The powder mixture comprises a steel powder component of a steel having two steel phases with an austenitic and a ferritic phase (duplex steel) and an austenitic steel powder component, wherein the powder mixture comprises Cr in an amount of at least 21.3 % by weight.

According to the embodiments described below, the powder mixture is e.g. processed by the direct metal laser sintering (DMLS) method. In the selective laser sintering or selective laser melting method small portions of a whole volume of powder required for manufacturing an object are heated up simultaneously to a temperature which allows a sintering and/or melting of these portions. This way of manufacturing an object can typically be characterized as a continuous and/or - on a micro-level - frequently gradual process, whereby the object is acquired through a multitude of heating cycles of small powder volumes. Solidification of these small powder portions is carried through selectively, i.e. at selected positions of a powder reservoir, which positions correspond to portions of an object to be manufactured. As in selective laser sintering or selective laser melting the process of solidification is usually carried through layer by layer the solidified powder in each layer is identical with a cross-section of the object that is to be built. Due to the small volume or mass of powder which is solidified in a given time span, e.g. 1 mm³ per second or less, and due to conditions in a process chamber of such additive manufacturing machines, which can favor a rapid cooldown below a critical temperature, the material normally solidifies quickly after heating.

In conventional sintering and casting methods one and the same portion of building material is heated up to a required temperature at the same time. A whole portion of material required to generate an object is cast into a mould in a liquid form. This volume of building material is therefore held above a temperature level required for melting or sintering for a much longer time compared to the selective laser sintering or selective laser melting method. Large volumes of hot material lead to a low cooling rate and a slow solidification process of the building material after heating. In other words, selective laser sintering or selective laser melting methods can be differentiated from conventional sintering and casting methods by processing of smaller volumes of building material, faster heat cycles and less need for heating up build material with high tolerances for avoiding a premature solidification of the material. These can be counted among the reasons why the amount of energy introduced into the building material for reaching the required temperatures can be controlled more accurately in selective laser sintering or selective laser melting methods. These conditions allow for setting an upper limit of energy input into the powder portions to be processed, which determines a temperature generated in the powder portions, more precisely, that is lower and closer to the melting point of the respective material than in conventional sintering or casting methods.

An object generated from a powder mixture according to the invention may show a change of various mechanical properties, but most notably shows a suppression of crack formation.

In the following the present invention will be further described by means of some examples, which however are not be construed as limiting the invention thereto in any manner.

### Example 1

A 70:30 mixture of an atomized duplex steel powder a particle size of 15 to 63 µm and an austenitic steel having a particle size of 15 to 63 µm µm was prepared in a dry mixing process. The compositions of the respective steel powders and the powder mixture are given in the following table 1.

**Table 1**

| Element | duplex steel | austenitic steel | Mixture 70:30 |
|---|---|---|---|
| Ni | 6.0-8.0 | 17.5-18.5 | 9.45-11.15 |
| C | Up to 0.03 | Up to 0.02 | Up to 0.03 |
| N | 0.24-0.35 | 0.18-0.25 | 0.2-0.35 |
| Mn | Up to 2.0 | Up to 1.0 | Up to 1.7 |
| Cu | Up to 0.5 | 0.5-1.0 | 0.15-0.65 |
| Cr | 24.0-26.0 | 19.5-20.5 | 22.65-24.35 |
| Si | Up to 1.0 | Up to 0.7 | Up to 0.91 |
| Mo | 3.0-4.5 | 6.0 to 7.0 | 3.9-5.25 |
| O | Up to 0.035 | Up to 0.035 | Up to 0.035 |
| P | Up to 0.035 | Up to 0.03 | Up to 0.034 |
| S | Up to 0.03 | Up to 0.01 | Up to 0.025 |

The thus prepared powder mixture was loaded into an EOS M290 machine, and test specimen according to ISO 6892 were prepared with either a layer thickness of 40 µm or a layer thickness of 80 µm using a heat input of 58.8 J/mm³ and 45.4 J/mm³, respectively. Some of the test specimen were subsequently subjected to a heat treatment at 1100 °C for 1 hour. All test specimen were then subjected to mechanical testing according to DIN EN ISO 6892-1 (2020). The results of these tests are provided in the following table 2:

**Table 2:**

| | 40 µm thickness | | | | 80 µm thickness | | | |
|---|---|---|---|---|---|---|---|---|
| | As build | | Heat treated | | As build | | Heat treated | |
| | v¹ | h² | v¹ | h² | v¹ | h² | v¹ | h² |
| Yield strength [MPa] | 1020 | 1170 | 650 | 580 | 880 | 1030 | 560 | 570 |
| Tensile strength [MPa] | 1180 | 1260 | 860 | 870 | 1050 | 1130 | 860 | 870 |
| Elongation [%] | 16 | 13 | 34 | 34 | 20 | 17 | 35 | 33 |
| Impact toughness [J] | 70 | | 150 | | 110 | | 140 | |
| Ferrite fraction [%] | 60-70 | | 20-30 | | 50-60 | | 20-30 | |

| | | | | | | | | |
|---|---|---|---|---|---|---|---|---|
| 1 = measured perpendicular to the building plane; 2 =measured horizontal to the building plane | | | | | | | | |

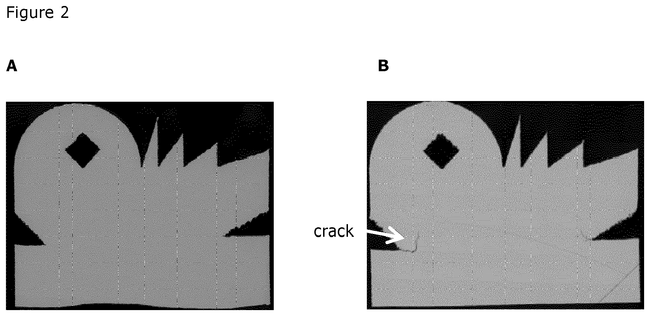

In the test specimen thus prepared no cracking was observed (see figure 2A), whereas a respective test specimen, which was prepared with the duplex steel powder only showed visible cracks (figure 2B). In addition, the test specimen prepared with the inventive powder mixture showed a finely distributed dual phase structure.

## Claims

1. Powder mixture for an additive manufacturing process, wherein the powder mixture comprises a steel powder component of a steel having two steel phases with an austenitic and a ferritic phase (duplex steel) and an austenitic steel powder component, wherein the powder mixture comprises Cr in an amount of at least 21.3 % by weight.

2. Powder mixture according to claim 1, which comprises about 50 to 80 wt.-%, preferably 60 to 80 wt.-%, of the steel powder component of a steel having two steel phases with an austenitic and a ferritic phase and about 20 to 50 wt.-%, preferably 20 to 40 wt.-% of the austenitic steel powder.

3. Powder mixture according to claim 1 or 2, wherein the steel powder component of a steel having two steel phases with an austenitic and a ferritic phase is a super duplex steel and/or a steel having a pitting resistance equivalence number PREN of ≥ 38 and ≤ 45, preferably of ≥ 40 and/or ≤ 43.5.

4. Powder mixture according to any one of claims 1 to 3, wherein the steel powder component of a steel having two steel phases with an austenitic and a ferritic phase is a powder of EN 1.4410 steel according to EN 10088-1 (2014).

5. Powder mixture according to any one of the preceding claims, wherein the austenitic steel powder component is a powder of EN 1.4547 steel according to EN 10088-1 (2014).

6. Powder mixture according to any one of the preceding claims, wherein the steel powder component of a steel having two steel phases with an austenitic and a ferritic phase and/or the austenitic steel powder component has an average particle size of from 10 µm to 100 µm and preferably from 20 to 60 µm, wherein the average particle size is determined by laser diffraction according to ISO 13320.

7. Method for the preparation of a powder mixture according to any one of claims 1 to 6, wherein the powder mixture is produced by mixing a steel powder of a steel having two steel phases with an austenitic and a ferritic phase and an austenitic steel powder in a predetermined ratio, wherein preferably the mixing is by dry mixing.

8. Method for the manufacture of a three-dimensional object, comprising providing a powder mixture as defined in any one of claims 1 to 6, preferably a powder mixture prepared according to the method of claim 7, and preparing the object by applying the mixture layer on layer and selectively consolidating the mixture, in particular by application of electromagnetic radiation, at positions in each layer, which correspond to the cross section of the object in this layer, wherein the positions are scanned in at least one interaction zone, in particular in a radiation interaction zone of an energy beam bundle.

9. Method according to claim 8, wherein the individual layers are applied at a thickness of 10 µm or more, preferably 20 µm or more and more preferably 30 µm or more and/or 100 µm or less, preferably 80 µm or less and more preferably 60 µm or less.

10. Method according to claim 8 or 9, further comprising a step of annealing the three-dimensional object at a temperature of more than 770°C and less than 1500°C, preferably at 900°C or more and/or 1350°C or less and more preferably at 1000°C or more and/or 1200°C or less for a time sufficient to increase the amount of the austenitic phase, preferably for 30 min or more and/or 120 min or less.

11. Three-dimensional object prepared according to the process of claims 8 to 10.

12. Three-dimensional object according to claim 10, which has a ferritic fraction of from 50 to 80 % and preferably of from 60 to 70 %, wherein more preferably the ferritic fraction is provided directly after additive manufacture and before being subjected to annealing temperatures of more than 800 °C.

13. Use of an austenitic steel powder to suppress the formation of cracks in a three-dimensional object, which is prepared by additive manufacture, preferably by a method according to any one of claims 8 to 10, from a steel powder having two steel phases with an austenitic and a ferritic phase, preferably wherein the steel powder has a PREN of at least 38 and more preferably of at least 40 and/or 45 or less.

14. Use according to claim 13, wherein the austenitic steel powder is mixed with steel powder having two steel phases with an austenitic and a ferritic phase and the mixture is subsequently processed by an additive manufacturing process.

15. Device for implementing a process according to claim 8 to 10, wherein the device comprises an irradiation unit emitting electromagnetic or particle irradiation, preferably a laser sintering or laser melting device (20), a process chamber having (3) an open container (5) with a container wall (6), a support (10), which is inside the process chamber (3), wherein open container (5) and support (10) are moveable against each other in vertical direction, a storage container (14) and a recoater (16), which is moveable in horizontal direction, and wherein the storage container (14) is at least partially filled with a powder mixture according to any one of claims 1 to 6.
